# EUROPÄISCHE PATENTSCHRIFT

(11) **EP 2 117 760 B1**
(45) Veröffentlichungstag und Bekanntmachung des Hinweises auf die Patenterteilung: **11.05.2011**
(21) Anmeldenummer: 08708574.2
(22) Anmeldetag: 01.02.2008
(51) Int. Cl.: B23K 9/127

(54) **VORRICHTUNG ZUM FÜGEN VON WERKSTÜCKTEILEN MITTELS LICHTBOGEN MIT EINER NAHTFÜHRUNGSEINRICHTUNG**
DEVICE FOR JOINING WORKPIECE PARTS BY MEANS OF AN ELECTRIC ARC, COMPRISING A SEAM GUIDING DEVICE
DISPOSITIF D'AJOUT DE PARTIES DE PIÈCES PAR L'INTERMÉDIAIRE D'UN ARC ÉLECTRIQUE COMPRENANT UN DISPOSITIF DE GUIDAGE

(30) Priorität: 02.02.2007 DE 102007006115
(43) Veröffentlichungstag der Anmeldung: 18.11.2009
(73) Patentinhaber: Scansonic Mi Gmbh, 13086 Berlin (DE)
(72) Erfinder: HASCHKE, Igor, 10439 Berlin (DE); KILIAN, Arwed, 14467 Ludwigsfelde (DE)
(74) Vertreter: Eisenführ, Speiser & Partner
(86) Internationale Anmeldenummer: PCT/EP2008/051267
(87) Internationale Veröffentlichungsnummer: WO 2008/092953

(56) Entgegenhaltungen:
- EP-A- 0 824 985
- EP-A- 0 855 240
- GB-A- 2 112 961
- GB-A- 2 254 172

## Beschreibung

Die Erfindung betrifft eine Vorrichtung zum Fügen von Werkstückteilen mittels Lichtbogen, mit einem Brenner und einer Nahtführungseinrichtung.

Vorrichtungen zum Fügen von Werkstückteilen unter Verwendung von Sensoren und Aktoren zur Nahtführung sind bekannt. Aus der DE 100 06 852 C5 ist beispielsweise eine Vorrichtung zum Fügen von Werkstückteilen bekannt, bei der ein Zusatzdraht als mechanisches Tastelement benutzt wird. Darüber hinaus sind diverse Schweißvorrichtungen bekannt, die taktile oder berührungslose Sensoren zur Nahtführung aufweisen (vgl. z.B. DE 196 15 069 A1, DD 247 625 A1, DE 33 41 964 A1 und DE 100 02 230 A1).

Herkömmliche Schweißvorrichtungen, bei denen ein Roboter als Aktor zur Nahtführung verwendet wird, besitzen eine relativ aufwendige und schwer handhabbare Schnittstelle zwischen dem die Position des Fügestoßes erfassenden Sensor und der Robotersteuerung.

In der auf die Anmelderin zurückgehenden, nicht vorveröffentlichten Patentanmeldung DE 10 2006 056 252.6 ist eine Vorrichtung zur Führung eines Energiestrahls entlang eines Fügestoßes beschrieben, die einen dem Energiestrahl vorlaufenden Führungsfinger aufweist. Die Vorrichtung ist mit einem Sensor ausgerüstet, der in einem den Wirkpunkt des Energiestrahls umfassenden Bereich die Lage des Fügestoßes relativ zu dem Führungsfinger detektiert. Die Vorrichtung weist ferner eine Regelungseinrichtung und einen an dem Führungsfinger abgestützten Aktor als Zusatzachse auf, wobei der Führungsfinger über den Aktor mit einer Energiestrahlzuführeinrichtung verbunden ist und die Regelungseinrichtung den Aktor in Abhängigkeit der detektierten Lage des Fügestoßes relativ zum Führungsfinger so ansteuert, dass der Wirkpunkt des Energiestrahls an einer gewünschten Position am Fügestoß liegt. Diese Vorrichtung besitzt durch die Zusatzachse, ergänzt durch weitere Zusatzachsen, eine einfachere Schnittstelle als Vorrichtungen, bei denen ein Roboter als Aktor zur Nahtführung verwendet wird. Bei Anwendung dieser Vorrichtung für das Lichtbogenfügen müssen jedoch die Zusatzachsen den gesamten Lichtbogenbrenner bewegen und sind daher selbst relativ schwer und nehmen eine relativ großen Bauraum ein.

Der vorliegenden Erfindung liegt die Aufgabe zugrunde, eine Vorrichtung der eingangs genannten Art bereitzustellen, die den Lichtbogen nachführt und gegenüber den bekannten gattungsgemäßen Vorrichtungen einfacher, leichter und kompakter ausgeführt werden kann.

Diese Aufgabe wird erfindungsgemäß durch eine Vorrichtung mit den Merkmalen des Anspruchs 1 gelöst.

Die erfindungsgemäße Vorrichtung umfasst im Wesentlichen einen Brenner und eine Nahtführungseinrichtung, wobei in dem Brenner mindestens eine bewegliche Verbindung integriert ist, die durch die Nahtführungseinrichtung in Abhängigkeit der Kontur eines von den zu verbindenden Werkstückteilen definierten Fügestoßes betätigt wird.

Durch die bewegliche Verbindung, die beispielsweise als Gelenk und/oder Führung ausgebildet ist, ist in dem Brenner mindestens ein Freiheitsgrad integriert, der die Positionierung des Lichtbogens in Bezug auf den Fügestoß unterstützt. Das Gelenk ist vorzugsweise als Gelenk mit zwei Freiheitsgraden und einer definierten Mittellage ausgebildet, so dass der untere bewegliche Teil des Brennerhalses in mehreren Richtung, insbesondere in Abstandsrichtung zum Werkstück sowie in seitlicher Richtung zu einer Werkstück- oder Fügestoßkante schwenkbar ist.

Gegenüber herkömmlichen Schweißvorrichtungen, bei denen ein Roboter als Aktor zur Nahtführung benutzt wird und somit eine aufwendige, schwierig zu handhabende Schnittstelle zwischen dem Nahtführungssensor und der Robotersteuerung vorliegt, ermöglicht die erfindungsgemäße Vorrichtung auf einfache Weise eine genaue adaptive Nachführung des Lichtbogens relativ zur Position des Fügestoßes. Durch die Integration des mindestens einen Freiheitsgrades in den Brenner muss nicht der gesamte Brenner bei einer Nachführung des Lichtbogens bewegt werden. Die mindestens eine bewegliche Verbindung, die erfindungsgemäß im Brenner integriert ist, sowie ein gegebenenfalls der beweglichen Verbindung zugeordneter Aktor können somit relativ leicht und kompakt ausgeführt werden.

Die erfindungsgemäße Vorrichtung lässt sich sowohl zum automatisierten Fügen als auch zum manuellen Fügen von Werkstückteilen einsetzen. Sie kann insbesondere zur freien Positionierung genutzt werden, zum Beispiel, um Fügeoperationen an Positionen durchzuführen, an denen die Zugänglichkeit so stark eingeengt ist, dass dort der gesamte Brenner einer herkömmlichen Vorrichtung nicht mehr ausreichend bewegt werden kann.

Vorzugsweise ist die mindestens eine bewegliche Verbindung so ausgeführt, dass der Brenner durch die bewegliche Verbindung mindestens zwei Freiheitsgrade besitzt. Diese Ausgestaltung ist bei Anwendungen zweckmäßig, bei denen eine Nachführung des Lichtbogens relativ zur Lage des Fügestoßes sowohl in im Wesentlichen senkrechter Abstandsrichtung zum Werkstück als auch in seitlicher Richtung zum Fügestoß gewünscht oder erforderlich ist.

Lichtbogenschweißbrenner weisen üblicherweise einen sogenannten Brennerhals auf. Eine bevorzugte Ausgestaltung der erfindungsgemäßen Vorrichtung sieht vor, dass die mindestens eine bewegliche Verbindung in dem Brennerhals integriert ist.

In weiterer Ausgestaltung der erfindungsgemäßen Vorrichtung wird insbesondere vorgeschlagen, dass die mindestens eine bewegliche Verbindung zwischen dem Brennerhals und einer Gasdüse oder Stromdüse des Brenners integriert ist. Die bewegliche Verbindung ist in diesem Fall besonders nah an der Fügestelle angeordnet. Da sie in diesem Fall im Wesentlichen nur die Gasdüse bzw. Stromdüse des Brenners tragen muss, kann sie dann sehr leicht und kompakt ausgebildet werden.

Die Vorteile der Erfindung können aber auch bereits erzielt werden, wenn gemäß einer anderen Ausgestaltung der erfindungsgemäßen Vorrichtung der Brennerhals in oder an einer Brennerhalsaufnahme befestigt ist und die mindestens eine bewegliche Verbindung zwischen dem Brennerhals und der Brennerhalsaufnahme integriert wird. Denn in diesem Fall braucht die bewegliche Verbindung jedenfalls nicht den Förderantrieb für einen Elektrodendraht bzw. Zusatzdraht der Fügevorrichtung tragen und kann dementsprechend einfacher und kostengünstiger ausgeführt werden.

Eine weitere bevorzugte Ausgestaltung der erfindungsgemäßen Vorrichtung besteht darin, dass der Brennerhals an einem Handgriff oder einem Drahtförderantrieb befestigt ist, wobei die mindestens eine bewegliche Verbindung dann zwischen dem Brennerhals und dem Handgriff oder dem Drahtförderantrieb integriert ist. Auch bei dieser Ausgestaltung lassen sich die vorstehend genannten Vorteile zumindest teilweise erzielen.

Die Nahtführungseinrichtung der erfindungsgemäßen Vorrichtung kann mindestens einen berührungslos messenden Sensor oder mindestens einen taktilen Sensor zur Erfassung der Lage des Fügestoßes aufweisen. Bei der Verwirklichung der erfindungsgemäßen Vorrichtung ist zu berücksichtigen, dass gegebenenfalls der Vorlauf des Sensors vor der Fügestelle insofern kompensiert werden muss, als der Brenner um die Zeit versetzt angesteuert werden muss, welche der Brenner bzw. die Gesamtvorrichtung benötigt, um die Strecke des Vorlaufes des Sensors zurückzulegen. Gemäß einer weiteren Ausgestaltung der erfindungsgemäßen Vorrichtung ist daher vorgesehen, dass sie einen Regler aufweist, der mit einer Einrichtung versehen ist, die bei einem dem Lichtbogen vorlaufenden Sensor den Vorlauf des Messpunktes des Sensors gegenüber dem Wirkpunkt des Lichtbogens kompensiert.

Eine weitere bevorzugte Ausgestaltung der erfindungsgemäßen Vorrichtung besteht darin, dass die NahtführungsEinrichtung einen im Lichtbogen abschmelzenden Zusatzdraht als mechanisches Tastelement verwendet.

Eine andere vorteilhafte Ausgestaltung der erfindungsgemäßen Vorrichtung besteht darin, dass die Nahtführungseinrichtung einen Führungsfinger aufweist, der dem Brenner vorlaufend die Kontur des von den zu verbindenden Werkstückteilen definierten Fügestoßes abtastet und aus elektrisch isolierendem Material gebildet ist, das einer Dauertemperaturbelastung von mindestens 400°C standhält. Das elektrisch isolierende Material wirkt isolierend gegenüber dem Lichtbogen und/oder isolierend gegenüber den Werkstückteilen.

Der Führungsfinger ist dabei vorzugsweise in Bezug auf den Lichtbogen so angeordnet, dass die Spitze des Führungsfingers vom äußeren Rand der Wirkstelle des Lichtbogens beabstandet ist, wobei der Abstand nicht mehr als 8 mm, vorzugsweise nicht mehr als 3 mm beträgt. Hierdurch wird eine hohe Genauigkeit bei der Nahtführung erzielt.

Eine weitere bevorzugte Ausgestaltung der erfindungsgemäßen Vorrichtung sieht vor, dass der Führungsfinger mit einer Randstrahlen des Lichtbogens zurückhaltenden Blende versehen ist. Die Blende weist dabei vorzugsweise eine den Lichtbogen begrenzende Öffnung auf. Insbesondere kann es sich um eine Blende mit einstellbarer Öffnungsweite handeln.

Im Brennerhals werden üblicherweise Strom und Gas übertragen. Die Ausführung eines oder mehrerer Gelenke im Brennerhals oder zwischen Brennerhals und Gas- bzw. Stromdüse, oder zwischen Brennerhals und Brennerhalsaufnahme muss daher so gestaltet werden, dass dem Rechnung getragen wird. Konstruktive Lösungen hierfür sind beispielsweise flexible Stromkabel und Schläuche zur Übertragung von Strom bzw. Gas. Eine weitere vorteilhafte Ausgestaltung einer erfindungsgemäßen Vorrichtung besteht in dem Einsatz eines metallischen Faltenbalges, der die Funktionen eines Gelenks, einer einen Führungsfinger gegen den Stoß vorspannenden Feder sowie einer Strom- und Gasdurchleitung gleichzeitig übernimmt.

Weitere bevorzugte und vorteilhafte Ausgestaltungen der erfindungsgemäßen Vorrichtung sind in den Unteransprüchen angegeben.

Nachfolgend wird die Erfindung anhand einer mehrere Ausführungsbeispiele darstellenden Zeichnung näher erläutert. Es zeigen in schematischer Darstellung:
- Fig. 1: ein erstes Ausführungsbeispiel einer erfindungs- gemäßen Vorrichtung an einem von zwei zu verbindenden Werkstückteilen definierten Fügestoß in Seitenansicht;
- Fig. 2: ein zweites Ausführungsbeispiel einer erfindungs- gemäßen Vorrichtung an einem Fügestoß in Seitenansicht;
- Fig. 3: ein drittes Ausführungsbeispiel einer erfindungs- gemäßen Vorrichtung an einem von zwei zu verbindenden Werkstückteilen definierten Fügestoß in Seitenansicht;
- Fig. 4: ein viertes Ausführungsbeispiel einer erfindungs- gemäßen Vorrichtung an einem Fügestoß in Seitenansicht;
- Fig. 5: ein fünftes Ausführungsbeispiel einer erfindungs- gemäßen Vorrichtung an einem Fügestoß in Seitenansicht;
- Fig. 6: ein sechstes Ausführungsbeispiel einer erfindungsgemäßen Vorrichtung, wobei ein Abschnitt der Vorrichtung in Seitenansicht dargestellt ist;
- Fig. 7: ein siebtes Ausführungsbeispiel einer erfindungsgemäßen Vorrichtung, wobei wiederum ein Abschnitt der Vorrichtung in Seitenansicht dargestellt ist;
- Fig. 8: den Abschnitt der Vorrichtung gemäß Fig. 7 in Führungsrichtung des Energiestrahls entlang des von den zu verbindenden Werkstückteilen definierten Fügestoßes betrachtet;
- Fig. 9: eine perspektivische Darstellung des Abschnitts der Vorrichtung der Fig. 7;
- Fig. 10: den Abschnitt der Vorrichtung gemäß Fig. 7 in Draufsicht;
- Fig. 11: ein achtes Ausführungsbeispiel einer erfindungsgemäßen Vorrichtung, wobei wiederum ein Abschnitt der Vorrichtung in Seitenansicht dargestellt ist;
- Fig. 12: den Abschnitt der Vorrichtung gemäß Fig. 11 in Draufsicht; und
- Fig. 13: eine herkömmliche Vorrichtung zum Fügen von Werkstückteilen mittels Lichtbogen, die mit einer Nahtführungseinrichtung versehen ist.

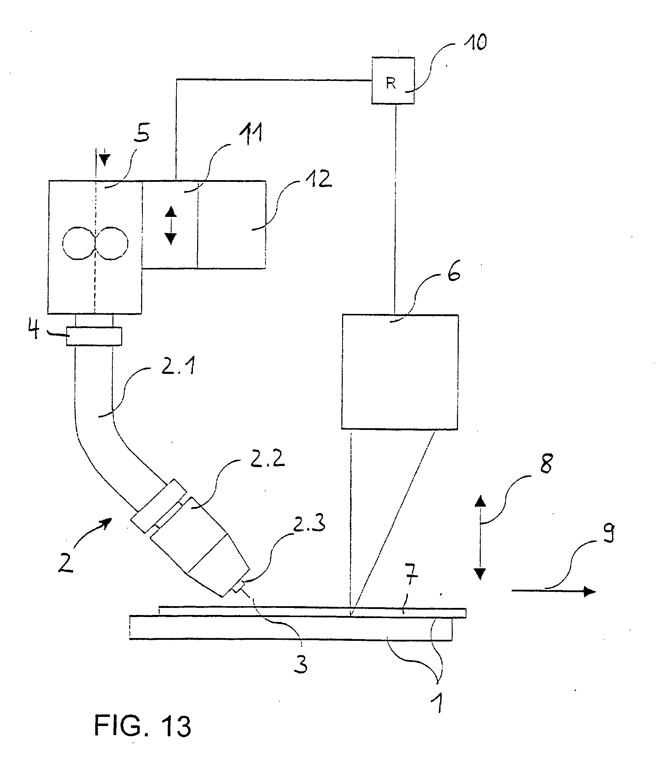

Fig. 13 zeigt beispielhaft einen Aufbau einer Vorrichtung zum Fügen von Werkstückteilen 1 mittels eines Lichtbogens nach dem Stand der Technik. Die Vorrichtung umfasst einen Brenner 2, der aus einem Brennerhals 2.1, einer Gasdüse 2.2 und einer Stromdüse 2.3 aufgebaut ist. Durch den Brennerhals 2.1 wird der Fügestelle Elektrodendraht 3 sowie Schutzgas zugeführt. Der Brennerhals 2.1 ist in einer Brennerhalsaufnahme 4 lösbar befestigt, die an einem Drahtförderantrieb 5 angebracht ist. Die Vorrichtung ist ferner mit einem dem Brenner 2 vorlaufenden Nahtführungssensor 6 versehen, der die Lage des Fügestoßes 7, der durch die miteinander zu verbindenden Werkstückteile 1 gebildet ist, in Abstandsrichtung 8 sowie quer (nicht eingezeichnet) zur Vorschubrichtung 9 erfasst. Die erfasste Lage des Fügestoßes 7 wird genutzt, um mit einem Regler 10 eine durch einen Aktor 11 gebildete Zusatzachse in ein oder zwei Raumrichtungen anzusteuern. Der Drahtförderantrieb 5 ist über den Aktor 11 an einem Roboter 12 bzw. Roboterarm montiert. Der Aktor 11 trägt somit den Drahtförderantrieb 5 sowie den gesamten Brenner 2 und ist daher relativ groß und schwer ausgebildet.

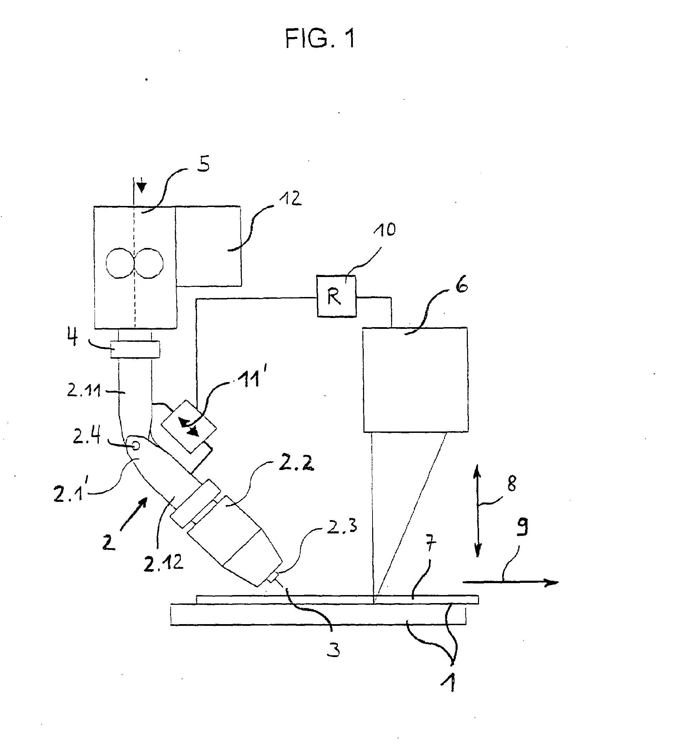

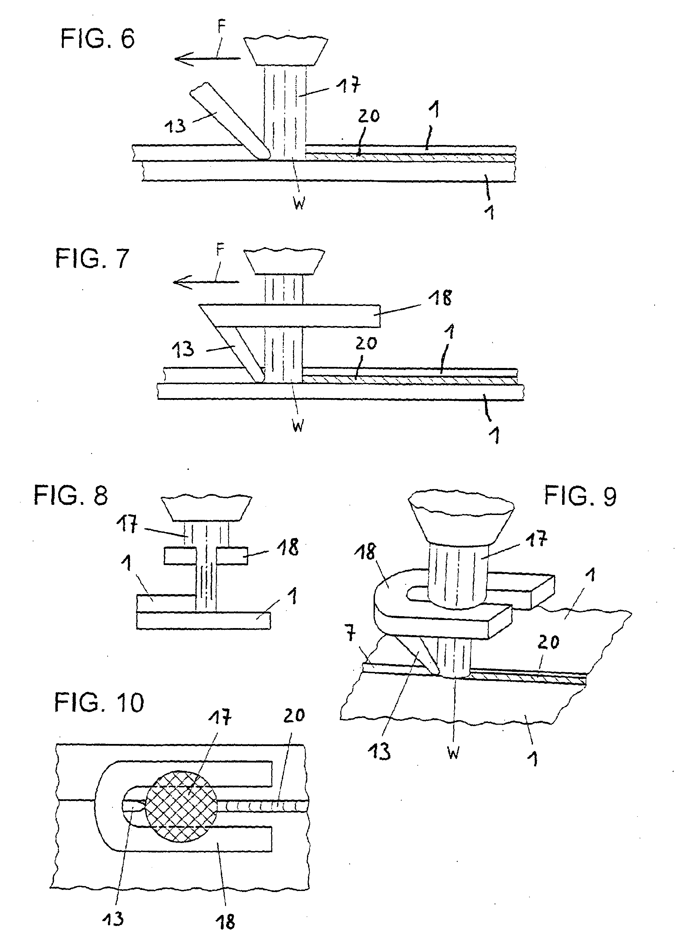

Es wird nun auf Fig. 1 Bezug genommen. Dort ist ein erstes Ausführungsbeispiel einer erfindungsgemäßen Vorrichtung skizziert. Im Unterschied zu einer herkömmlichen Vorrichtung gemäß Fig. 6 ist in dem Brenner 2 der erfindungsgemäßen Vorrichtung mindestens eine bewegliche Verbindung 2.4 integriert, die durch die Nahtführungseinrichtung (6, 10, 11) in Abhängigkeit der Kontur eines von den zu verbindenden Werkstückteilen 1 definierten Fügestoßes 7 betätigt wird. Die zu verbindenden Werkstückteile 1 bilden in der Zeichnung einen Überlappungsstoß 7.

Die Nahtführungseinrichtung umfasst wiederum einen Sensor 6, der die Position eines von den zu verbindenden Werkstückteilen 1 definierten Fügestoßes 7 berührungslos erfasst oder abtastet und entsprechende Sensorsignale abgibt. Bei dem berührungslos messenden Sensor 6 kann es sich insbesondere um einen Lichtschnittsensor handeln.

In dem in Fig. 1 dargestellten Ausführungsbeispiel ist die bewegliche Verbindung 2.4 im Brennerhals 2.1' integriert und als Gelenk ausgeführt. Dem Gelenk 2.4 ist mindestens ein steuerbarer Aktor 11' zugeordnet, mittels dem die bewegliche Verbindung betätigbar ist. Der Aktor 11' ist einerseits mit dem an dem Drahtförderantrieb 5 befestigten Teil 2.11 des Brennerhalses 2.1' und andererseits mit dem beweglichen Teil 2.12 des Brennerhalses 2.1' verbunden. Der Aktor 11' kann insbesondere aus einem hydraulischen oder pneumatischen Arbeitszylinder oder einem elektromotorischen Linearantrieb bestehen. Dem Aktor 11' ist ein Regler zugeordnet, der den Aktor 11' in Abhängigkeit der Sensorsignale ansteuert. Der Regler 10 ist dabei vorzugsweise mit einer Einrichtung versehen, die den Vorlauf des Messpunktes des Sensors 6 gegenüber dem Wirkpunkt des Lichtbogens kompensiert.

Der Drahtförderantrieb 5 ist unmittelbar an einem Roboter 12 montiert. Da der Aktor 11' in der erfindungsgemäßen Vorrichtung erheblich weniger Masse bewegen muss als dies bei der Zusatzachse bzw. dem Aktor 11 der Vorrichtung gemäß Fig. 6 der Fall ist, kann der Aktor 11' der erfindungsgemäßen Vorrichtung deutlich kleiner, leichter und kostengünstiger als die Zusatzachse 11 der Vorrichtung gemäß Fig. 6 ausgeführt werden.

Die Nahtführungseinrichtung (6, 10, 11') der erfindungsgemäßen Vorrichtung bewirkt, dass die Stromdüse mit dem Elektrodendraht an der Spitze des Brenners der Kontur des Fügestoßes 7 nachgeführt wird, d.h. in Abstandsrichtung 8 zum Werkstück und/oder seitlich in Richtung Werkstück bzw. Fügestoß 7 nachgeführt wird. Hierzu weist die erfindungsgemäße Vorrichtung neben dem Aktor 11' gegebenenfalls einen weiteren Aktor (nicht dargestellt) auf.

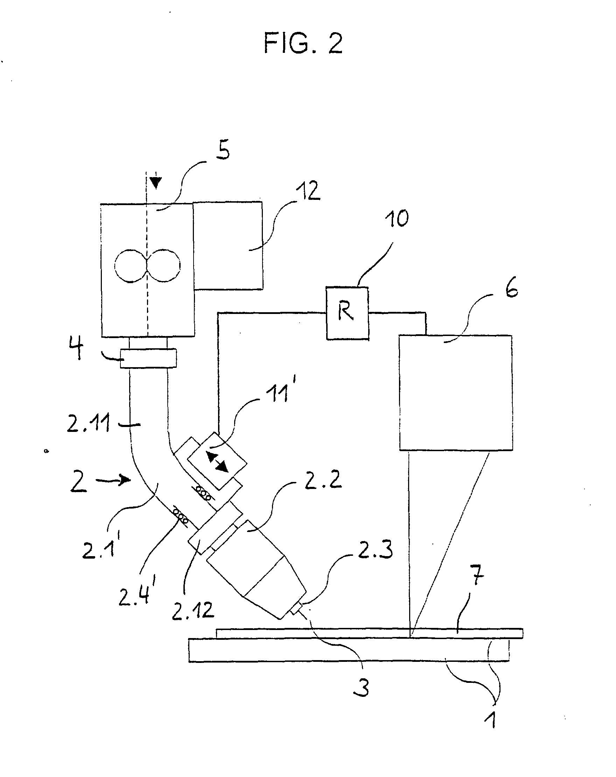

Die in Fig. 2 dargestellte erfindungsgemäße Vorrichtung unterscheidet sich von dem in Fig. 1 skizzierten Ausführungsbeispiel hinsichtlich der Ausgestaltung der im Brennerhals 2.1' integrierten beweglichen Verbindung 2.4'. In dem in Fig. 2 gezeigten Ausführungsbeispiel ist die bewegliche Verbindung 2.4' als Führung ausgeführt. Ein beweglicher, die Gasdüse 2.2 und die Stromdüse 2.3 aufweisender Teil 2.12 des Brennerhalses 2.1' ist in oder an dem mit dem Drahtförderantrieb 5 verbundenen Teil 2.11 des Brennerhalses 2.1' teleskopartig geführt. Die Führung 2.4' ist so ausgebildet, dass sich der bewegliche Teil 2.12 des Brennerhalses 2.1' gegenüber dem Teil 2.11 nicht verdrehen kann. Der den beweglichen Teil 2.12 gegenüber dem am Drahtförderantrieb 5 fixierten Teil 2.11 bewegende Aktor 11' kann wiederum aus einem hydraulischen oder pneumatischen Arbeitszylinder, einem elektromotorischen Linearantrieb oder dergleichen bestehen.

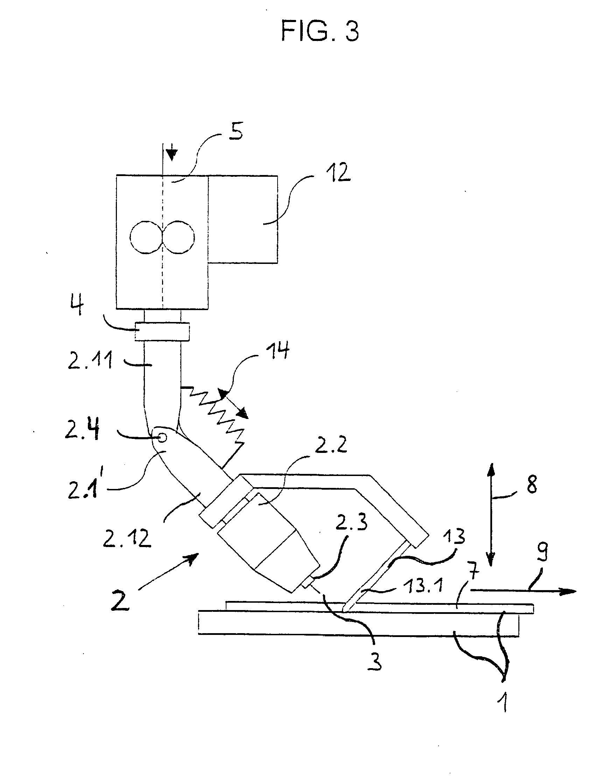

Anstelle eines berührungslos messenden Nahtführungssensors kann bei der erfindungsgemäßen Vorrichtung auch ein taktiler Sensor Verwendung finden. Dies ist in den Figuren 3 bis 5 dargestellt. Entsprechend dem in Fig. 1 gezeigten Ausführungsbeispiel ist auch bei dem Ausführungsbeispiel gemäß Fig. 3 im Brennerhals 2.1' eine bewegliche Verbindung in Form eines Gelenks 2.4 integriert. Die Nahtführungseinrichtung weist in diesem Fall einen taktilen Führungsfinger 13 auf, der dem Brenner 2 vorlaufend die Kontur des von den zu verbindenden Werkstückteilen definierten Fügestoßes 7 abtastet und mit dem beweglichen, den Brennerkopf tragenden Abschnitt 2.12 des Brenners verbunden ist. Dem im Brennerhals 2.1' integrierten Gelenk 2.4 ist dabei mindestens eine Feder 14 zugeordnet, die den Führungsfinger 13 kraftschlüssig gegen den Fügestoß 7 vorspannt. Die mindestens eine Feder 14 ist mit einem ihrer Enden an dem an dem Drahtförderantrieb 5 montierten Teil 2.11 des Brennerhalses und mit ihrem anderen Ende an dem durch das Gelenk 2.4 beweglichen Teil 2.12 des Brennerhalses 2.1' abgestützt. Der Führungsfinger 13 weist einen gegenüber der Werkstückoberfläche schräg ausgerichteten, die Werkstückoberfläche berührenden Abschnitt 13.1 auf, so dass die Spitze des Führungsfingers 13 beim Vorschub des Brenners 2 in der vorgegebenen Vorschubrichtung 9 schleppend auf der Werkstückoberfläche entlang des Fügestoßes 7 bewegt wird.

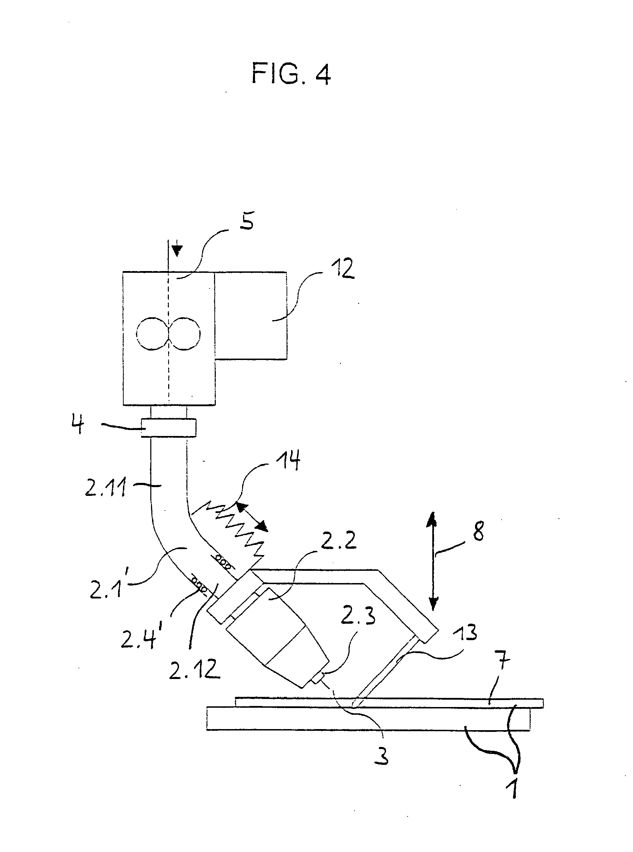

Die in Fig. 4 skizzierte Vorrichtung unterscheidet sich von dem in Fig. 3 gezeigten Ausführungsbeispiel in der Ausgestaltung der im Brennerhals integrierten beweglichen Verbindung. In dem in Fig. 4 gezeigten Ausführungsbeispiel ist die bewegliche Verbindung als teleskopartige Führung 2.4' ausgeführt.

Bei den in den Figuren 3 und 4 skizzierten Ausführungsbeispielen übernimmt der Führungsfinger 13 die Aufgabe des Nahtführungssensors gemäß den Figuren 1 und 2, während die Feder 14 die Aufgabe des Aktors 11' übernimmt. Die Feder 14 drückt dabei den unteren Teil 2.12 des Brennerhalses 2.1' mit der Gasdüse 2.2 und der Stromdüse 2.3 sowie dem Führungsfinger 13 in Abstandsrichtung 8 in Richtung Werkstück 1. Die Feder 14 ist vorzugsweise so ausgebildet bzw. angeordnet, oder durch eine weitere Feder (nicht gezeigt) ergänzt, dass sie auch seitlich in Richtung einer Werkstück- bzw. Fügestoßkante 7 wirkt, so dass sich der Führungsfinger 13 seitlich am Werkstück, insbesondere an der Fügestoßkante 7 abstützt. Die Ausführungsvarianten gemäß den Figuren 3 und 4 lassen sich besonders preiswert, leicht und klein realisieren.

Wenn der Brenner 2 und der ihm vorlaufende Führungsfinger 13 fest miteinander verkoppelt sind, lässt sich eine Vorlaufkompensation nicht ohne weiteres durchführen. Bei den in den Figuren 3 und 4 skizzierten Ausführungsbeispielen der erfindungsgemäßen Vorrichtung, die rein mechanisch mit Führungsfinger 13 und einer oder mehreren Federn 14 funktionieren, ist eine Vorlaufkompensation nicht möglich. Eine entsprechend ausgeführte Vorrichtung sollte nur in solchen Fällen bzw. an Fügestoßkonturen angewendet werden, bei denen der Vorlauf klein gehalten werden kann und/oder die Kontur nur geringe Krümmungen aufweist.

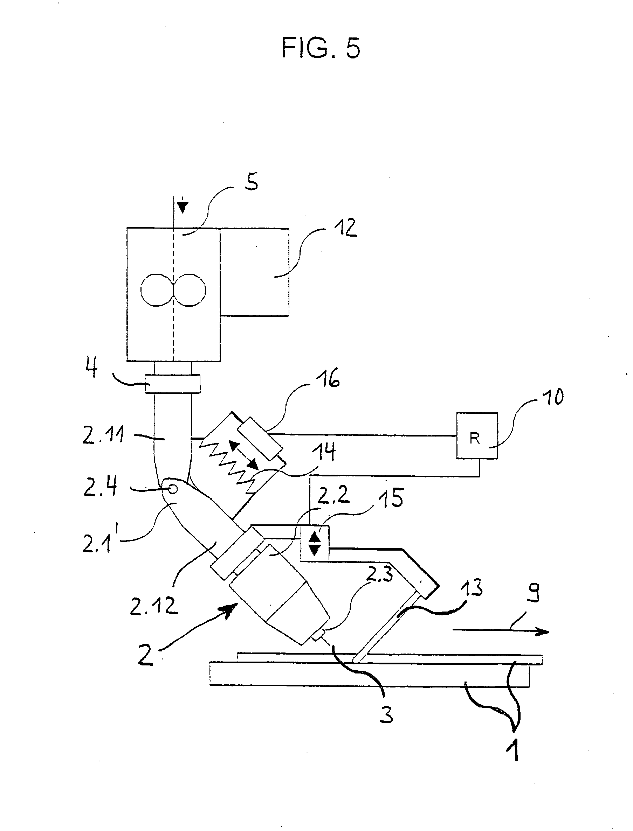

In Fig. 5 ist ein Ausführungsbeispiel skizziert, bei dem zwischen dem Führungsfinger 13 und dem Brenner 2 ein weiterer Aktor 15 angeordnet ist, der bei entsprechender Ansteuerung eine Relativbewegung zwischen dem Führungsfinger 13 und dem beweglichen Abschnitt 2.12 des Brenners 2 bewirkt. Der Feder 14 bzw. der mindestens einen beweglichen Verbindung 2.4 ist dabei mindestens ein Sensor 16 zugeordnet, der die Position und/oder den Spannungszustand der Feder 14 oder die relative Position der Teile 2.11, 2.12 der beweglichen Verbindung 2.4 erfasst und entsprechende Sensorsignale an einen Regler 10 abgibt.

Der Regler 10 steuert den Aktor 15 in Abhängigkeit der Sensorsignale, so dass der Vorlauf des Führungsfingers 13 kompensiert wird.

Die Zufuhr von Strom, Schutzgas, Elektrodendraht 3 und/oder Zusatzdraht erfolgt in den in den Figuren 1 bis 5 dargestellten Ausführungsbeispielen über flexible Leitungen bzw. Schläuche (nicht dargestellt), die im und/oder am Brennerhals 2.1' angeordnet sind.

Die Ausführung der Erfindung ist nicht auf die vorstehend beschriebenen und in der Zeichnung dargestellten Ausführungsbeispiele beschränkt. Vielmehr sind eine Vielzahl von Varianten denkbar, die auch bei grundsätzlich abweichender Gestaltung von der Erfindung - wie sie in den Ansprüchen angegeben ist - Gebrauch machen. So ist es beispielsweise auch möglich, die mindestens eine bewegliche Verbindung 2.4, 2.4' zwischen dem Brennerhals 2.1' und der Gasdüse 2.2 oder zwischen dem Drahtförderantrieb 5 und dem Brennerhals 2.1' anzuordnen.

Bei den in den Figuren 6 bis 12 schematisch dargestellten Vorrichtungen handelt es sich jeweils um eine Vorrichtung zum Fügen von Werkstückteilen mittels eines Lichtbogens. Die zu verbindenden Werkstückteile 1 bilden in den hier dargestellten Beispielen einen Überlappstoß, an dem eine Kehlnaht hergestellt werden soll.

Die Vorrichtung umfasst einen der Führung des Energiestrahls entlang des Fügestoßes (Überlappstoßes) dienenden Tastfinger (Führungsfinger) 13, dessen Spitze vorlaufend zur Führungsrichtung F des Lichtbogens angeordnet ist.

Der Tastfinger 13 kann auch als Führungsfinger oder Führspitze bezeichnet werden. Es handelt sich dabei um ein taktiles Tastelement, das kraftschlüssige entlang eines von den zu verbindenden Werkstückteilen 1 definierten Fügestoßes 7 bewegt wird und den Lichtbogen 17 seitlich und in Abstandsrichtung führt. Man kann daher insoweit auch von einer taktilen Nahtführung sprechen.

Der Führungsfinger 13 der erfindungsgemäßen Vorrichtung ist aus elektrisch isolierendem Material gebildet, das eine hohe Verschleißfestigkeit besitzt und einer Dauertemperaturbelastung von mindestens 400°C, vorzugsweise mindestens 500°C standhält. Das elektrisch isolierende Material des Führungsfingers 13 wirkt isolierend gegenüber dem Lichtbogen 17 und auch isolierend gegenüber den Werkstückteilen 1. Bei dem elektrisch isolierenden Material des Führungsfingers 13 handelt es sich vorzugsweise um ein hoch verschleißfestes Material, beispielsweise um einen hoch verschleißfesten keramischen Werkstoff. Alternativ kann der Führungsfinger 13 auch aus einem elektrisch isolierenden Materialverbund, beispielsweise aus einem einen keramischen Werkstoff umfassenden Werkstoffverbund gebildet sein. Insbesondere kann die Isolierung in Form einer keramischen Beschichtung des Führungsfingers 13 realisiert sein.

Der Führungsfinger 13 ist in Bezug auf den Lichtbogen so angeordnet, dass seine Spitze mit möglichst geringem Vorlauf vor dem äußeren Rand der Wirkstelle W des Lichtbogens 17 angeordnet ist, wobei dieser Vorlauf nicht mehr als 8 mm, vorzugsweise nicht mehr als 3 mm beträgt. In den in den Figuren 6 bis 12 dargestellten Ausführungsbeispielen ist der Führungsfinger 13 vorzugsweise so angeordnet, dass seine Spitze den äußeren Rand der Wirkstelle W des Lichtbogens 17 antastet.

Der Führungsfinger 13 ist vorzugsweise mit einer Heizeinrichtung (nicht gezeigt) versehen. Die Heizeinrichtung ist beispielsweise in dem Führungsfinger 13 integriert. Sie kann beispielsweise aus einem in dem Führungsfinger 13 eingebetteten oder eingegossenen Heizdraht bestehen.

Alternativ kann die Temperierung des Führungsfingers 13 auch durch Wärmeleitung über die Aufnahme (Halterung) des Führungsfingers 13 erfolgen. Die Aufnahme (nicht gezeigt) des Führungsfingers 13 weist in diesem Fall eine entsprechende Heizeinrichtung auf.

Eine weitere Variante der erfindungsgemäßen Vorrichtung besteht darin, den Führungsfinger 13 in einer Kammer oder Aufnahme (nicht gezeigt) durch Wärmeleitung, Wärmestrahlung und/oder Induktion zu erwärmen. Der so erwärmte Führungsfinger 13 wird dann für die taktile Nahtführung aus der Kammer herausbewegt. Diese Variante sieht somit eine Vorwärmung des Führungsfingers 13 in der Kammer bzw. Aufnahme vor.

Eine andere Variante der erfindungsgemäßen Vorrichtung besteht darin, den Führungsfinger 13 aktiv zu kühlen. Hierzu kann in dem Führungsfinger 13 Kühleinrichtung integriert oder der Führungsfinger an einer eine Kühleinrichtung aufweisenden Halterung montiert sein (nicht gezeigt).

Das in den Figuren 7 bis 10 dargestellte Ausführungsbeispiel unterscheidet sich von dem Ausführungsbeispiel der Fig. 6 dadurch, dass der Führungsfinger 13 mit einer Blende (Prozessblende) 18 versehen ist. Die Blende 18 hält Randstrahlen des Lichtbogens 17 zurück, so dass der Energieeintrag in die Werkstückteile 1 im Bereich der Fügestelle gezielt verringert ist (vgl. insbesondere Fig. 8). Hierdurch wird auch eine Verringerung der Nahtbreite erzielt.

In dem in Fig. 9 dargestellten Ausführungsbeispiel ist die Blende 18 einseitig offen, nämlich im Wesentlichen U-förmig ausgebildet. Ihre offene Seite liegt in Führungsrichtung F des Lichtbogens 17 betrachtet hinten. Die Blende 18 bzw. der Führungsfinger 13 ist an einer Halterung (nicht gezeigt) befestigt, die mit der Einrichtung zur Zuführung des Lichtbogens 17 verbunden ist.

Die Blende 18 ist wärmeleitend mit dem Führungsfinger 13 verbunden. Sie ist aus einem hochtemperaturfesten Material gebildet, das einer Dauertemperaturbelastung von mindestens 400°C, vorzugsweise von mindestens 500°C standhält. Vorzugsweise ist auch die Blende 18 aus einem keramischen Werkstoff oder einem einen keramischen Werkstoff umfassenden Werkstoffverbund gebildet.

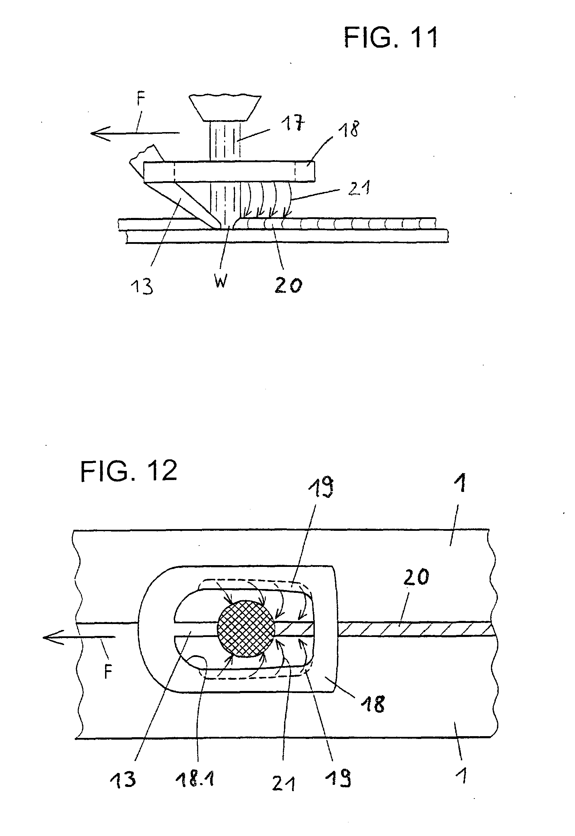

Die Figuren 11 und 12 zeigen ein weiteres Ausführungsbeispiel der erfindungsgemäßen Vorrichtung. Hier ist der Führungsfinger 13 mit einer Einrichtung 19 zur Zuführung von Schutzgas versehen, die mit dem Führungsfinger fest verbunden ist. Die Einrichtung 19 zur Schutzgaszuführung ist in der Blende integriert. Die Blende 18 dient hier somit nicht nur der Einengung des Lichtbogens 17 durch Zurückhaltung von Randstrahlen, sondern auch der gezielten Zuführung von Schutzgas und dessen Halten (Konzentrieren) oberhalb der frisch hergestellten Schweißnaht bzw. Fügenaht 20. Das Schutzgas ist in den Figuren 11 und 12 durch bogenförmige Pfeile 21 angedeutet.

Bei dem in den Figuren 11 und 12 dargestellten Ausführungsbeispiel ist die Blende 18 geschlossen ausgebildet, wobei ihre den Energiestrahl (Lichtbogen) 17 begrenzende Öffnung 18.1 im Wesentlichen oval ausgebildet ist. Alternativ kann die Öffnung 18.1 der Blende gegebenenfalls auch im Wesentlichen kreisförmig, rechteckig oder quadratisch ausgebildet sein.

Die Einrichtung 19 zur Schutzgaszuführung ist in diesem Ausführungsbeispiel so ausgebildet, dass das Schutzgas ringsegmentförmig, koaxial und nachlaufend zum Energiestrahl 17 zugeführt wird. Ebenso liegt es aber auch im Rahmen der Erfindung, die Einrichtung 19 zur Schutzgaszuführung so auszubilden, dass das Schutzgas ringförmig, koaxial zum Energiestrahl 17 zugeführt wird.

Auch liegt es Rahmen der vorliegenden Erfindung, die Blende so auszuführen, dass ihre Öffnungsweite einstellbar ist. Hierdurch lässt sich der Energieeintrag bzw. die Nahtbreite gezielt beeinflussen. Ferner umfasst die vorliegende Erfindung eine Ausführung, bei der die Blende mit einem oder mehreren magnetischen oder elektromagnetischen Elementen zur gezielten Beeinflussung des Lichtbogens ausgestattet ist. Auch diese Ausgestaltung ermöglicht eine gezielte Verringerung der Nahtbreite. Schließlich kann die Blende auch eine Kühleinrichtung aufweisen, um ihre Dauertemperaturbelastbarkeit zu erhöhen.

### Bezugszeichenliste

- 1: Werkstückteile
- 2: Brenner
- 2.1: Brennerhals
- 2.1': Brennerhals mit mindestens einem Freiheitsgrad
- 2.11: fixierte Teil des Brennerhalses
- 2.12: beweglicher Teil des Brennerhalses
- 2.2: Gasdüse
- 2.3: Stromdüse
- 2.4: bewegliche Verbindung (Gelenk)
- 2.4': bewegliche Verbindung (teleskopierbare Führung)
- 3: Elektrodendraht
- 4: Brennerhalsaufnahme
- 5: Drahtförderantrieb
- 6: Nahtführungssensor
- 7: Fügestoß
- 8: Abstandsrichtung
- 9: Vorschubrichtung
- 10: Regler
- 11: Aktor / Zusatzachse
- 11': Aktor
- 12: Roboter
- 13: Führungsfinger
- 13.1: Abschnitt des Führungsfingers
- 14: Feder
- 15: Aktor
- 16: Positionssensor / Kraftsensor
- 17: Lichtbogen
- 18: Blende
- 18.1: Blendenöffnung
- 19: Einrichtung zur Zuführung von Schutzgas
- 20: Fügenaht
- 21: Pfeile
- F: Führungsrichtung
- W: Wirkstelle des Lichtbogens (Energiestrahls)

## Patentansprüche

1. Vorrichtung zum Fügen von Werkstückteilen (1) mittels Lichtbogen, mit einem Brenner (2), der einen Brennerhals (2.1') und eine Gasdüse (2.2) aufweist, wobei der Brennerhals (2.1') in oder an einer Brennerhalsaufnahme (4) oder an einem Handgriff oder einem Drahtförderantrieb (5) befestigt ist, und einer Nahtführungseinrichtung, **dadurch gekennzeichnet, dass** in dem Brenner (2) mindestens eine bewegliche Verbindung (2.4; 2.4') integriert ist, die eine Bewegung der Gasdüse (2.2) relativ zu der Brennerhalsaufnahme (4), dem Handgriff oder dem Drahtförderantrieb (5) ermöglicht und durch die Nahtführungseinrichtung in Abhängigkeit der Kontur eines von den zu verbindenden Werkstückteilen (1) definierten Fügestoßes (7) betätigt wird.

2. Vorrichtung nach Anspruch 1,
**dadurch gekennzeichnet, dass** der Brenner (2) durch die bewegliche Verbindung (2.4; 2.4') mindestens zwei Freiheitsgrade besitzt.

3. Vorrichtung nach Anspruch 1 oder 2,
**dadurch gekennzeichnet, dass** die mindestens eine bewegliche Verbindung (2.4; 2.4') zwischen einem an der Brennerhalsaufnahme (4) befestigten Teil (2.11) und einem demgegenüber beweglichen Teil (2.12) des Brennerhalses (2.1') angeordnet ist.

4. Vorrichtung nach Anspruch 1 oder 2,
**dadurch gekennzeichnet, dass** die mindestens eine bewegliche Verbindung (2.4; 2.4') zwischen dem Brennerhals (2.1') und der Gasdüse (2.2) integriert ist.

5. Vorrichtung nach Anspruch 1 oder 2,
**dadurch gekennzeichnet, dass** der Brenner (2) eine Stromdüse (2.3) aufweist, wobei die mindestens eine bewegliche Verbindung (2.4; 2.4') zwischen dem Brennerhals (2.1') und der Stromdüse (2.3) integriert ist.

6. Vorrichtung nach Anspruch 1 oder 2,
**dadurch gekennzeichnet, dass** die mindestens eine bewegliche Verbindung (2.4; 2.4') zwischen dem Brennerhals (2.1') und der Brennerhalsaufnahme (4) integriert ist.

7. Vorrichtung nach Anspruch 1 oder 2,
**dadurch gekennzeichnet, dass** die mindestens eine bewegliche Verbindung (2.4; 2.4') zwischen dem Brennerhals (2.1') und dem Handgriff oder Drahtförderantrieb (5) integriert ist.

8. Vorrichtung nach einem der Ansprüche 1 bis 7,
**dadurch gekennzeichnet, dass** die Nahtführungseinrichtung einen Führungsfinger (13) aufweist, der dem Brenner (2) vorlaufend die Kontur des von den zu verbindenden Werkstückteilen (1) definierten Fügestoßes (7) abtastet und mit einem einen Brennerkopf tragenden, beweglichen Abschnitt (2.12) des Brenners verbunden ist, wobei der mindestens einen beweglichen Verbindung (2.4, 2.4') mindestens eine Feder (14) zugeordnet ist, die den Führungsfinger (13) kraftschlüssig gegen den Fügestoß (7) vorspannt.

9. Vorrichtung nach Anspruch 8,
**dadurch gekennzeichnet, dass** der Feder (14) und/oder der mindestens einen beweglichen Verbindung (2.4; 2.4') mindestens ein Sensor (16) zugeordnet ist, der die Position und/oder den Spannungszustand der Feder (14) oder die relative Position von zueinander beweglichen Teilen (2.11, 2.12) der beweglichen Verbindung (2.4; 2.4') erfasst und entsprechende Sensorsignale abgibt, wobei der Führungsfinger (13) mit einem Aktor (15) versehen ist, der eine Relativbewegung zwischen dem Führungsfinger (13) und dem beweglichen Abschnitt (2.12) des Brenners (2) bewirkt, und wobei dem Aktor (15) ein Regler (10) zugeordnet ist, der den Aktor (15)in Abhängigkeit der Sensorsignale ansteuert.

10. Vorrichtung, nach einem der Ansprüche 1 bis 7,
**dadurch gekennzeichnet, dass** die Nahtführungseinrichtung einen Führungsfinger (13) aufweist, der dem Brenner (2) vorlaufend die Kontur des von den zu verbindenden Werkstückteilen (1) definierten Fügestoßes (7) abtastet und aus elektrisch isolierendem Material gebildet ist, das einer Dauertemperaturbelastung von mindestens 400°C standhält.

11. Vorrichtung nach einem der Ansprüche 8 bis 10,
**dadurch gekennzeichnet, dass** der Führungsfinger (13) in Bezug auf den Lichtbogen so angeordnet ist, dass die Spitze des Führungsfingers (13) vom äußeren Rand der Wirkstelle des Lichtbogens beabstandet ist, wobei der Abstand nicht mehr als 8 mm beträgt.

12. Vorrichtung nach einem der Ansprüche 8 bis 11,
**dadurch gekennzeichnet, dass** der Führungsfinger (13) mit einer Randstrahlen des Lichtbogens zurückhaltenden Blende (18) versehen ist.

13. Vorrichtung nach einem der Ansprüche 1 bis 7,
**dadurch gekennzeichnet, dass** die Nahtführungseinrichtung einen im Lichtbogen (17) abschmelzenden Zusatzdraht als mechanisches Tastelement benutzt.

14. Vorrichtung nach einem der Ansprüche 1 bis 13,
**dadurch gekennzeichnet, dass** die Nahtführungseinrichtung mindestens einen Sensor (6) aufweist, der die Position eines von den zu verbindenden Werkstückteilen (1) definierten Fügestoßes (7) erfasst oder abtastet und entsprechende Sensorsignale abgibt, wobei der mindestens einen beweglichen Verbindung (2.4; 2.4') mindestens ein Aktor (11') zugeordnet ist, mittels dem die bewegliche Verbindung (2.4; 2.4') betätigbar ist, und wobei dem Aktor (11') ein Regler (10) zugeordnet ist, der den Aktor (11') in Abhängigkeit der Sensorsignale ansteuert.

15. Vorrichtung nach Anspruch 14,
**dadurch gekennzeichnet, dass** der Regler (10) mit einer Einrichtung versehen ist, die bei einem dem Lichtbogen vorlaufenden Sensor (6) den Vorlauf des Messpunktes des Sensors (6) gegenüber dem Wirkpunkt des Lichtbogens kompensiert.

## Claims

1. Device for joining workpiece parts (1) by means of electric arcs, comprising a welding torch (2) which comprises a torch neck (2.1') and a gas nozzle (2.2), wherein the torch neck (2.1') is secured in or on a welding torch neck mount (4) or on a handle or a wire conveying drive (5) and a seam guiding device, **characterised in that** in the welding torch (2) at least one movable connection (2.4; 2.4') is integrated, which enables the movement of the gas nozzle (2.2) relative to the welding torch neck mount (4), the handle or the wire conveying drive (5) and is activated by the seam guiding device as a function of the contour of a butt joint (7) defined by the work piece parts (1) to be connected.

2. Device according to claim 1, **characterised in that** the welding torch (2) owing to the movable connection (2.4; 2.4') has a least two degrees of freedom.

3. Device according to claim 1 or 2, **characterised in that** the at least one movable connection (2.4; 2.4') is arranged between a part (2.11) secured onto the welding torch neck mount (4) and a part (2.12) of the welding torch neck (2.1') moveable relative thereto.

4. Device according to claim 1 or 2, **characterised in that** the at least one movable connection (2.4; 2.4') is integrated between the welding torch neck (2.1') and the gas nozzle (2.2).

5. Device according to claim 1 or 2, **characterised in that** the welding torch (2) comprises a current nozzle (2.3), wherein the at least one movable connection (2.4; 2.4') is integrated between the welding torch neck (2.1') and the current nozzle (2.3).

6. Device according to claim 1 or 2, **characterised in that** the at least one movable connection (2.4; 2.4') is integrated between the welding torch neck (2.1') and the welding torch neck mount (4).

7. Device according to claim 1 or 2, **characterised in that** the at least one movable connection (2.4; 2.4') is integrated between the welding torch neck (2.1') and handle or wire conveying drive (5).

8. Device according to any one of claims 1 to 7, **characterised in that** the seam guiding device comprises a guiding finger (13), which ahead of the welding torch (2) scans the contour of the butt joint (7) defined by the workpiece parts (1) to be connected and is connected to a movable section (2.12) of the welding torch supporting a welding torch head, wherein at least one spring (14) is assigned to the at least one movable connection (2.4, 2.4'), which spring prestresses the guiding finger (13) in a force-fit manner against the butt joint (7).

9. Device according to claim 8, **characterised in that** at least one sensor (16) is assigned to the spring (14) and/or the at least one movable connection (2.4; 2.4'), which sensor determines the position and/or the tensioning state of the spring (14) or the relative position of parts (2.11, 2.12) of the movable connection (2.4, 2.4') that are movable relative to one another, and emits corresponding sensor signals, wherein the guiding finger (13) is provided with an actuator (15), which triggers a relative movement between the guiding finger (13) and the movable section (2.12) of the welding torch (2), and wherein a controller (10) is assigned to the actuator (15), which drives the actuator (15) as a function of the sensor signals.

10. Device according to any one of claims 1 to 7, **characterised in that** the seam guiding device comprises a guiding finger (13), which ahead of the welding torch (2) scans the contour of the butt joint (7) defined by the workpiece parts (1) to be connected and is made of electrically insulating material, which can withstand a constant temperature loading of at least 400°C.

11. Device according to any one of claims 8 to 10, **characterised in that** the guiding finger (13) is arranged in relation to the electric arcs, so that the tip of the guiding finger (13) is spaced apart from the outer edge of the active site of the electric arc, wherein the distance is not more than 8 mm.

12. Device according to any one of claims 8 to 11, **characterised in that** the guiding finger (13) is provided with a cover (18) for holding back the marginal rays of the electric arc.

13. Device according to any one of claims 1 to 7, **characterised in that** the seam guiding device uses an additional wire, which melts in the electric arc, as a mechanical sensor element.

14. Device according to one of claims 1 to 3, **characterised in that** the seam guiding device comprises at least one sensor (6), which determines or scans the position of a butt joint (7) defined by the workpiece parts (1) to be joined and emits corresponding sensor signals, wherein the at least one movable connection (2.4, 2.4') is assigned at least one actuator (11'), by means of which the movable connection (2.4, 2.4') can be activated, and wherein a controller (10) is assigned to the actuator (11') which controller controls the actuator (11') as a function of the sensor signals.

15. Device according to claim 14, **characterised in that** the controller (10) is provided with a device, which with a sensor (6) ahead of the electric arc compensates the advance of the measuring point of the sensor (6) relative to the active point of the electric arc.

## Revendications

1. Dispositif d'ajout de parties de pièces (1) par l'intermédiaire d'un arc électrique, avec un brûleur, qui présente un col de brûleur (2.1') et une buse à gaz (2.2), le col du brûleur (2.1') étant fixé dans ou à un logement de col de brûleur (4), ou à une poignée ou à un système d'entraînement de fils (5), et avec un dispositif de guidage, **caractérisé en ce qu'**au moins une liaison mobile (2.4; 2 .4') est intégrée dans le brûleur (2), liaison qui permet un déplacement de la buse à gaz par rapport au logement de col de brûleur (4), à la poignée ou au système d'entraînement de fils (5) et qui est actionnée par le dispositif de guidage en fonction du contour d'un bord d'assemblage (7) défini par les parties de pièce (1) à relier.

2. Dispositif selon la revendication 1,
**caractérisé en ce que** le brûleur (2) possède au moins deux degrés de liberté de par la liaison mobile (2.4; 2.4').

3. Dispositif selon la revendication 1 ou 2,
**caractérisé en ce que** au moins une liaison mobile (2.4; 2.4') est disposée entre une partie (2.11) fixée au logement de col de brûleur (4) et une partie mobile (2.12) du col de brûleur (2.1') par rapport à ladite partie.

4. Dispositif selon la revendication 1 ou 2,
**caractérisé en ce que** au moins une liaison mobile (2.4; 2.4') est intégrée entre le col de brûleur (2.1') et la buse à gaz (2.2).

5. Dispositif selon la revendication 1 ou 2,
**caractérisé en ce que** le brûleur (2) présente une buse de contact (2.3), au moins une liaison mobile (2.4; 2.4') étant intégrée entre le col de brûleur (2.1') et la buse de contact (2.3).

6. Dispositif selon la revendication 1 ou 2,
**caractérisé en ce que** au moins une liaison mobile (2.4; 2.4') est intégrée entre le col de brûleur (2.1') et le logement de col de brûleur (4).

7. Dispositif selon la revendication 1 ou 2,
**caractérisé en ce que** au moins une liaison mobile (2.4; 2.4') est intégrée entre le col de brûleur (2.1') et la poignée ou le système d'entraînement de fils (5).

8. Dispositif selon l'une des revendications 1 à 7,
**caractérisé en ce que** le dispositif de guidage présente un doigt de guidage (13), qui balaie en aval du brûleur (2) le contour du bord d'assemblage (7) défini par les parties de pièce (1) à relier et qui est relié à une section mobile (2.12) du brûleur portant une tête de brûleur, au moins un ressort (14) étant associé à au moins une liaison mobile (2.4; 2.4'), lequel précontraint par force le doigt de guidage (13) contre le bord d'assemblage (7).

9. Dispositif selon la revendication 8,
**caractérisé en ce qu'**au moins un capteur (16) est associé au ressort (14) et/ou à au moins une liaison mobile (2.4; 2.4'), lequel détermine la position et/ou l'état de contrainte du ressort (14) ou la position relative des parties mobiles l'une par rapport à l'autre (2.11, 2.12) de la liaison mobile (2.4; 2.4') et émet les signaux de capteur correspondants, le doigt de guidage (13) étant équipé d'un actionneur (15), qui entraîne un déplacement relatif entre le doigt de guidage (13) et la section mobile (2.12) du brûleur (2), et un régulateur (10) étant associé à l'actionneur (15), qui commande l'actionneur (15) en fonction des signaux de capteur.

10. Dispositif selon l'une des revendications 1 à 7,
**caractérisé en ce que** le dispositif de guidage présente un doigt de guidage (13) qui balaie en aval du brûleur (2) le contour du bord d'assemblage (7) défini par les parties de pièce (1) à relier et qui est formé d'un matériau isolant supportant une contrainte de température constante d'au moins 400°C.

11. Dispositif selon l'une des revendications 8 à 10,
**caractérisé en ce que** le doigt de guidage (13) est disposé par rapport à l'arc électrique de telle façon que la pointe du doigt de guidage (13) est écartée du bord extérieur du point d'action de l'arc électrique, l'écart ne dépassant pas 8 mm.

12. Dispositif selon l'une des revendications 8 à 11,
**caractérisé en ce que** le doigt de guidage (13) est équipé d'un diaphragme (18) qui retient les rayons marginaux de l'arc électrique.

13. Dispositif selon l'une des revendications 1 à 7,
**caractérisé en ce que** le dispositif de guidage utilise un fil supplémentaire fondant dans l'arc électrique (17) comme élément palpeur mécanique.

14. Dispositif selon l'une des revendications 1 à 3,
**caractérisé en ce que** le dispositif de guidage présente au moins un capteur (6), qui détermine ou balaie la position d'un bord d'assemblage (7) défini par les parties de pièce (1) à relier et émet les signaux de capteur correspondants, au moins un actionneur (11 ') étant associé à au moins une liaison mobile (2.4; 2.4'), au moyen duquel la liaison mobile (2.4; 2.4') peut être actionnée, et un régulateur (10) étant associé à l'actionneur (11 '), qui commande l'actionneur (11 ') en fonction des signaux de capteur.

15. Dispositif selon la revendication 14,
**caractérisé en ce que** le régulateur (10) est équipé d'un dispositif, qui compense l'avance du point de mesure du capteur (6) par rapport au point d'action de l'arc électrique pour un capteur (6) précédant l'arc électrique.
